# EUROPÄISCHE PATENTANMELDUNG

(11) **EP 1 493 545 A1**
(43) Veröffentlichungstag der Anmeldung: **05.01.2005**
(21) Anmeldenummer: 04015372.8
(22) Anmeldetag: 30.06.2004
(51) Int. Cl.: B29C 45/73, B29C 45/00, B60R 21/20, B29C 45/16

(54) **Airbag-Abdeckung und Verfahren zur Herstellung einer Airbag-Abdeckung**

(30) Priorität: 30.06.2003 DE 10329380
(71) Anmelder: Kunststoff-Technik Scherer & Trier GmbH & Co. KG, 96247 Michelau (DE)
(72) Erfinder: Dipl.Ing. Krappmann Matthias, 91301 Forchheim (DE)
(74) Vertreter: Prechtel, Jörg, Dipl.-Phys. Dr.

(57) **Zusammenfassung**

Die vorliegende Erfindung betrifft eine Airbag-Abdeckung (10) aus thermoplastischem Kunststoff, welche wenigstens einen ersten Teilbereich mit einem ersten Oberflächen-Volumen-Verhältnis und wenigstens einen zweiten Teilbereich (18) mit einem zweiten Oberflächen-Volumen-Verhältnis aufweist, wobei das zweite Oberflächen-Volumen-Verhältnis größer ist als das erste Oberflächen-Volumen-Verhältnis, und welche hergestellt wird, indem man einen in eine temperierte Gussform eingebrachten, plastifizierten Kunststoff so weit abkühlt, bis ein ein Entformen erlaubender Festigungsgrad der Airbag-Abdeckung (10) erreicht ist und dann die Airbag-Abdeckung (10) entformt, wobei man den Verfestigungsvorgang im zweiten Teilbereich (18) der Airbag-Abdeckung (10) durch entsprechend unterschiedliche Temperaturführung im ersten Teilbereich und im zweiten Teilbereich (18) an den Verfestigungsvorgang im ersten Teilbereich angleicht. Gemäß der Erfinung ist die Airbag-Abdeckung (10) aus zwei oder mehr Kunststoffkomponenten (50, 52) aufgebaut.

## Beschreibung

Die Erfindung betrifft eine Airbag-Abdeckung aus thermoplastischem Kunststoff, welche wenigstens einen ersten Teilbereich mit einem ersten Oberflächen-Volumen-Verhältnis und wenigstens einen zweiten Teilbereich mit einem zweiten Oberflächen-Volumen-Verhältnis aufweist, wobei das zweite Oberflächen-Volumen-Verhältnis größer ist als das erste Oberflächen-Volumen-Verhältnis, und welche hergestellt wird, indem man einen in eine temperierte Gussform eingebrachten, plastifizierten Kunststoff so weit abkühlt, bis ein ein Entformen erlaubender Festigungsgrad der Airbag-Abdeckung erreicht ist und dann die Airbag-Abdeckung entformt, wobei man den Verfestigungsvorgang im zweiten Teilbereich der Airbag-Abdeckung durch entsprechend unterschiedliche Temperaturführung im ersten Teilbereich und im zweiten Teilbereich an den Verfestigungsvorgang im ersten Teilbereich angleicht.

Die Erfindung betrifft ferner ein Spritzgießverfahren zur Herstellung einer solchen Airbag-Abdeckung.

Darüber hinaus betrifft die Erfindung eine Airbag-Abdeckung umfassend eine erste Schicht aus thermoplastischem Kunststoff, welche wenigstens einen ersten Teilbereich mit einer in Form wenigstens einer Ausnehmung eingebrachten Aufreißnaht und einen zweiten Teilbereich mit im Wesentlichen gleichmäßiger Schichtdicke aufweist, wobei die Schicht hergestellt wird, indem man einen in eine temperierte Gussform eingebrachten, plastifizierten Kunststoff so weit abkühlt, bis ein ein Entformen erlaubender Festigungsgrad der Schicht erreicht ist und dann die Schicht entformt, wobei man den Verfestigungsvorgang im zweiten Teilbereich der Schicht durch entsprechend unterschiedliche Temperaturführung im ersten Teilbereich und im zweiten Teilbereich an den Verfestigungsvorgang im ersten Teilbereich angleicht.

Das Spritzen von Gussteilen wie Airbag-Abdeckungen mit gleichmäßiger Wandstärke bereitet im Allgemeinen keine Probleme. Sobald größere Wandstärkenunterschiede auftreten, d.h. allgemeiner, wenn die jeweiligen Oberflächen-Volumen-Verhältnisse in verschiedenen Teilbereichen des Gussteils deutlich voneinander abweichen, treten am fertigen Gussteil häufig lokale Abweichungen von der Sollform, z.B. in Form von Einfallstellen oder partiellen Erhebungen, auf. Selbst wenn diese im Bereich von Zehntelmillimetern oder darunter liegen, sind sie bei ansonsten durchgehender, ggf. strukturierter Sichtfläche, z.B. bei schrägem Lichteinfall, erkennbar. Dies ist eine Beeinträchtigung des Erscheinungsbildes, die bei hochwertigen Artikeln, wie z. B. Kraftfahrzeugteilen, unerwünscht ist. In gewissem Ausmaß lassen sich derartige Einfallstellen dadurch unterdrücken, dass während der Abkühlphase weiterhin Kunststoff mit hohem Druck in die Form nachgedrückt wird. Dies führt jedoch zu dementsprechend aufwendigem Aufbau der Spritzgussanlage mit erhöhtem Energieverbrauch und vermag die lokalen Abweichungen von der Sollform nur unvollständig zu vermeiden.

Da angenommen wird, dass eine Ursache für die mangelnde Formtreue im Bereich größerer Änderungen des Oberflächen-Volumen-Verhältnisses auf lokal unterschiedliches Schwindungsverhalten des Kunststoffs zurückzuführen ist, insbesondere auf Grund unterschiedlicher lokaler Temperaturen, könnte man daran denken, die Abkühlphase des Gussteils durch entsprechende Temperaturführung der Gussform dementsprechend zu strecken. Dies führt jedoch zu einer äußerst unerwünschten Verlängerung der Zykluszeit und damit der Produktivität. Aus diesen Gründen werden herkömmlicherweise bei Gussteilen größere Sprünge im Oberflächen-Volumen-Verhältnis vermieden, was jedoch abträglich in Bezug auf die Herstellungskosten (größerer Kunststoffmaterialbedarf) und ggf. auch bezüglich der erwünschten Eigenschaften des Gussteils ist.

So besteht die Forderung an eine Airbag-Abdeckung, dass diese im Crashfall zuverlässig den sich aufblasenden Airbag freigibt. Hierzu ist die Airbag-Abdeckung üblicherweise mit Aufreißnähten versehen, die im Crashfall zuverlässig aufzugehen haben. Diese Aufreißnähte werden von Nuten innerhalb der Airbag-Abdeckung gebildet. Diese Nuten bilden also einen zweiten Teilbereich des Gussteils mit vergleichsweise großem Oberflächen-Volumen-Verhältnis und befinden sich auf der der Sichtfläche gegenüberliegenden Seite der Airbag-Abdeckung. Im Allgemeinen zeichnet sich der Verlauf der Aufreißnähte an der Sichtfläche der Airbag-Abdeckung ab. Er wird in der Regel durch entsprechendes Design kaschiert, beispielsweise dadurch, dass gerade in diesem Bereich eine Designkante vorgesehen wird. Dies bedeutet jedoch eine Einschränkung der Freiheit im Design. Auch ist herkömmlicherweise die Nuttiefe zur Reduzierung der Formabweichungen nicht allzu groß, was besonders sorgfältiges Aufreißdesign der Airbag-Abdeckung erfordert, da ja ein Aufreißen im Crashfall sicher zu stellen ist.

Um bei ausgehärteten Gussteilen Abweichungen von der Soll-Form, insbesondere Einfallstellen oder partielle Erhebungen, zu vermeiden, ist es bekannt, dass man den Verfestigungsvorgang im zweiten Teilbereich des Gussteils durch entsprechend unterschiedliche Temperaturführung im ersten Teilbereich und im zweiten Teilbereich an den Verfestigungsvorgang im ersten Teilbereich angleicht. Es hat sich gezeigt, dass hierdurch die optische Qualität des Gussteils verbessert wird. So zeichnet sich im Falle einer Airbag-Abdeckung die Aufreissnut weniger deutlich auf der Sichtfläche ab.

Aus der GB 23 20 455 A ist eine Airbag-Abdeckung gemäß dem Oberbegriff der Ansprüche 1 und 13 bekannt. Diese Airbag-Abdeckung wird mit Hilfe einer Gussform hergestellt, welche in dem für das Formen der Aufreißnaht vorgesehenen Teil der Gussform mit einem Einsatzteil ausgebildet ist, das eine geringer Wärmeleitfähigkeit aufweist, als der für das Formen des ersten Teilbereichs vorgesehene Teil der Gussform. Auf diese Weise wird ein Erkalten des die Aufreißnaht aufweisenden zweiten Teilbereichs im Vergleich zum ersten Teilbereich der Airbag-Abdeckung verlangsamt, um den Verfestigungsvorgang der beiden Teilbereiche aneinander anzugleichen und Einfallstellen auf der Sichtfläche der Airbag-Abdeckung zu reduzieren. Die Aufreißnaht der Airbag-Abdeckung der GB 2 320 455 A weist im senkrecht zur Nahtverlaufsrichtung verlaufenden Schnitt die Form einer Dreiecksnut auf, wobei die Nutschenkel zwischen sich einen Winkel von etwa 100° einschließen und die Tiefe der Nut etwa die Hälfte der Schichtdicke der Airbag-Abdeckung beträgt.

Ferner ist aus der JP 2000-052390 A ein Verfahren zum Herstellen von Kunststoffgussteilen bekannt, bei welchem ein erster Teilbereich mit einem kleineren Oberflächen-Volumen-Verhältnis während des Aushärtens auf einer geringeren Temperatur gehalten werden kann, als ein zweiter Teilbereich mit einem größeren Oberflächen-Volumen-Verhältnis. Zur Durchführung dieses Verfahrens stellt die JP 2000-052390 A eine mehrteilige Gussform bereit, wobei unterschiedliche Teile der Gussform den verschiedenen Teilbereichen mit unterschiedlichen Oberflächen-Volumen-Verhältnissen des Gussteils zugeordnet sind und jeweils unterschiedlich temperierbar sind.

Die EP 0 006 289 A1 stellt ferner eine Gussform bereit, in welcher Kunststoffgussteile gegossen werden können, welche Rippen oder Vorsprünge aufweisen. Auf einer den Rippen oder Vorsprüngen abgewandten Sichtfläche des Kunststoffgussteils kann dann die Entstehung von Einfallstellen vermieden werden, indem in die Gussform in den den Rippen oder Vorsprüngen zugeordneten Teilbereichen Isolationsmaterialien eingelegt werden, um ein zu schnelles Auskühlen der Oberflächen der Rippen bzw. Vorsprünge zu vermeiden.

Ferner offenbart die US 4 548 773 eine Kunststoffgussvorrichtung zum Gießen von plattenförmigen Kunststoffgussteilen, welche bereichsweise eine erhöhte oder reduzierte Plattendicke aufweisen. Bei der bekannten Vorrichtung sind in den Teilen der Gussform, welche zum Gießen der Plattenbereiche mit größerer Plattendicke vorgesehen sind, Wärmeableitmittel bereitgestellt, welche die Wärme aus den dickeren Plattenbereichen schneller abziehen, um somit dickere und dünnere Plattenbereiche mit gleicher Geschwindigkeit aushärten zu können.

Darüber hinaus ist in der US 6 146 576 eine Form beschrieben, in welcher plattenartige Teile eines Verbundwerkstoffs in eine bestimmte Form gepresst und ausgehärtet werden können. Die zu formenden plattenartigen Teile werden dabei zwischen zwei Formhälften aufgenommen, welche elektrisch beheizbar sind. Die bekannte Form bietet die Möglichkeit, Teile ungleichmäßiger Form oder Teile, welche aus verschiedenen Materialien gebildet sind, in einer Form mit einer Mehrzahl unterschiedlicher Heizzonen zu formen, wobei die unterschiedlichen Heizzonen mit jeweils unterschiedlichen Temperaturen betrieben werden können. Dazu werden insbesondere in die unterschiedlichen Heizzonen unterschiedliche Betriebsströme eingespeist.

Bei Airbag-Abdeckungen, welche mit den herkömmlichen Spritzgießverfahren hergestellt werden, bleibt jedoch das folgende Problem. Um ein definiertes und zuverlässiges Aufreissen der Airbag-Abdeckung im Falle der Zündung eines Airbags zu gewährleisten, ist es wünschenswert, eine möglichst schwache Aufreißnaht zu verwenden, d.h. insbesondere eine Nut, welche eine möglichst große Tiefe aufweist, so dass die Airbag-Abdeckung am Boden der Nut besonders dünn ausgebildet ist und leicht aufreißt. Bei einer sehr tiefen Nut kommt es jedoch vor, dass trotz der verwendeten angeglichenen Temperaturführung zwischen dem ersten und zweiten Teilbereich sich der Verlauf der Aufreißnähte an der Sichtfläche der Airbag-Abdeckung abzeichnet. Außerdem reduziert eine schwache Aufreißnaht, insbesondere eine tiefe Nut, die Gesamtfestigkeit der Airbag-Abdeckung und es kann im eingebauten Zustand der Abdeckung zu einem Kantenversatz oder gar zu einem ungewollten Aufreißen der Naht kommen. Wird andererseits die Nuttiefe so gewählt, dass eine Beeinträchtigung der Oberflächenqualität der Sichtfläche zuverlässig vermieden wird, so muss dafür eine reduzierte Aufreißsicherheit in Kauf genommen werden.

Aufgabe der Erfindung ist es daher, eine Airbag-Abdeckung bereitzustellen, welche bei variierendem Oberflächen-Volumen-Verhältnis ein verbessertes äußeres Erscheinungsbild bietet und gleichzeitig optimale Aufreißsicherheit gewährleistet.

Gemäß der vorliegenden Erfindung wird diese Aufgabe gelöst durch eine Airbag-Abdeckung der oben genannten Art, welche aus zwei oder mehr Kunststoffkomponenten aufgebaut ist. Auf diese Weise ist es möglich, einen eine Aufreißnaht aufweisenden zweiten Teilbereich der Airbag-Abdeckung mit einem zweiten Oberflächen-Volumen-Verhältnis vorzusehen, das so gewählt ist, dass im Falle der Zündung eines von der Airbag-Abdeckung abgedeckten Airbags ein sicheres Aufreißen dieser Aufreißnaht gewährleistet wird, während die zweite Kunststoffkomponente für ein verbessertes äußeres Erscheinungsbild der Airbag-Abdeckung sorgt.

Dabei kann, falls gewünscht, das zweite Oberflächen-Volumen-Verhältnis auch größer gewählt werden, d.h. im Beispielsfalle der Nut mit größerer Nuttiefe gearbeitet werden und/oder weniger hochwertiges und damit weniger kostspieliges Kunststoffmaterial verwendet werden. Die größere Nuttiefe führt im Falle der Airbag-Abdeckung dazu, dass geringere Aufreißkräfte erforderlich sind, so dass größere Freiheit im Design der Airbag-Abdeckung ohne Einbußen in der Aufreißsicherheit besteht (in Folge dessen kann auch die Anzahl der kostenträchtigen Funktionstests der Airbag-Abdeckung reduziert werden). Erfindungsgemäß läßt sich eine Reduzierung der restlichen Wandstärke der Airbag-Abdeckung im Bereich der Nut um 30-40% erzielen.

Die unterschiedliche Temperaturführung im ersten Teilbereich und im zweiten Teilbereich läßt sich durch unterschiedliche Maßnahmen erreichen. So wäre prinzipiell eine lokale Erwärmung des Kunststoffmaterials im zweiten Teilbereich durch elektromagnetische Einstrahlung denkbar. Einfacher ist es, wenn man, wie vorgeschlagen, die ggf. mehrteilige Gussform in den jeweiligen Teilbereichen zugeordnete Abschnitte unterteilt und diese auf dementsprechend unterschiedlichen Temperaturen hält. Der zweite Teilbereich, der sich auf Grund des größeren Oberflächen-Volumen-Verhältnisses schneller an der kühleren Gussform abkühlt als das übrige Gussteil, wird also dadurch an diesem vergleichsweise schnelleren Abkühlen und damit Verfestigen gehindert, dass der ihm zugeordnete Abschnitt der Gussform auf einer höheren Temperatur gehalten wird als die übrige Gussform. Dies kann erfindungsgemäß mit baulich einfachen Mitteln dadurch realisiert werden, dass man eine übliche Gussform mit Temperierung auf eine erste Temperatur von beispielsweise 50°C zum Zeitpunkt der Entformung verwendet, diese jedoch mit einer lokalen Heizung, vorzugsweise mittels einer elektrischen Heizpatrone versieht, um den zweiten Abschnitt der Gussform auf einer zweiten Temperatur zu halten, die etwa 30-100°C, vorzugsweise 50-60°C höher ist als die genannte erste Temperatur. Die zweite Temperatur kann also bei 80-160°C, vorzugsweise bei 90-110°C, am besten bei etwa 100°C liegen. Die zweite Temperatur liegt knapp unterhalb der Erweichungstemperatur, vorzugsweise etwa 30°C darunter.

Es wird angenommen, dass die durch die unterschiedliche Temperaturführung im ersten und zweiten Teilbereich erzielte höhere optische Qualität hauptsächlich darauf zurückzuführen ist, dass eine vorzeitige Verfestigung im zweiten Teilbereich (z.B. Aufreißnahtbereich) auf Grund vorzeitiger Abkühlung vermieden wird. Eine derartige, vorzeitige lokale Verfestigung hat offenbar zur Folge, dass bei der erst später erfolgenden Verfestigung des ersten Teilbereichs mit entsprechender Schwindung des Kunststoffmaterials Materialbewegungen stattfinden, die der verfestigte Bereich nicht mitmachen kann. Im Ergebnis erhält man ohne die unterschiedliche Temperaturführung eine ungleichmäßige Oberflächengestalt mit sich auf der Sichtfläche abzeichnendem Nahtverlauf.

Eine Gussform zur Herstellung einer Airbag-Abdeckung aus thermoplastischem Kunststoff in der vorstehend beschriebenen Art kann wie folgt bereitgestellt werden.

Um die unterschiedlichen Betriebstemperaturen in einfacher Weise zu realisieren, könnte man daran denken, sowohl den ersten Abschnitt als auch den zweiten Abschnitt an jeweils einen gesonderten Fluid-Temperierungskreis anzuschließen. Angesichts dessen, dass in vielen Fällen der zweite Teilbereich (z. B. Nutbereich) gegenüber dem übrigen, ersten Teilbereich vergleichsweise klein ist, kann vorteilhafterweise eine herkömmliche fluid-temperierte Gussform eingesetzt werden, die dann lokal, z. B. elektrisch, beheizbar ist. Hierzu kann man ein gesondertes Einsatzteil vorsehen, welches dann den zweiten Abschnitt der Gussform bildet. Dieses Einsatzteil kann dann insbesondere elektrisch beheizbar ausgebildet sein, vorzugsweise durch Einsetzen einer Heizpatrone.

Das Einsatzteil wird im Falle einer Airbag-Abdeckung mit Aufreißnaht mit einer dementsprechend ausgebildeten Rippe versehen sein, die die Aufreißnaht oder einen Abschnitt der Aufreißnaht ausformt.

Im Hinblick auf schnelle Abkühlung des Gussteils insgesamt und damit kurze Zykluszeit, ist es vorteilhaft, die Gussform aus wärmeleitendem Material, vorzugsweise Wärmeleitbronze zu bilden. Im Gegensatz dazu kann das Einsatzteil aus schlecht wärmeleitendem Material gebildet sein, um die höhere zweite Temperatur im zweiten Teilbereich ohne weiteres aufrecht erhalten zu können. Hierbei kann man Stahl, am besten Vergütungsstahl, einsetzen, mit dem weiteren Vorteil der erhöhten mechanischen Stabilität des Einsatzteils, insbesondere der scharfkantigen Rippe.

Die Form des Einsatzteils richtet sich nach dem Design der Aufreißnaht. Bei einer sternförmigen Anordnung der Aufreißnähte kann dementsprechend ein Einsatzteil mit sternförmig angeordneten Armen eingesetzt werden. Die Arme werden zweckmäßigerweise durch in sie eingesteckte Heizpatronen geheizt.

Es ist aber auch denkbar, lediglich einen Teil der Aufreißnähte erfindungsgemäß auszuformen, beispielsweise dann, wenn die übrigen Aufreißnähte entweder über Designkanten oder sonstige Designmaßnahmen kaschiert werden können oder an einer weniger auffälligen Stelle liegen. In einem derartigen Fall kann man auch mit einem einfachen Einsatzteil auskommen, welches lediglich einen Nutabschnitt ausformt.

Die Erfindung betrifft auch eine Airbag-Abdeckung umfassend eine erste Schicht aus thermoplastischem Kunststoff, welche wenigstens einen ersten Teilbereich mit einer in Form wenigstens einer Ausnehmung eingebrachten Aufreißnaht und einen zweiten Teilbereich mit im Wesentlichen gleichmäßiger Schichtdicke aufweist, wobei die Schicht hergestellt wird, indem man einen in eine temperierte Gussform eingebrachten, plastifizierten Kunststoff so weit abkühlt, bis ein ein Entformen erlaubender Festigungsgrad der Schicht erreicht ist und dann die Schicht entformt, wobei man den Verfestigungsvorgang im zweiten Teilbereich der Schicht durch entsprechend unterschiedliche Temperaturführung im ersten Teilbereich und im zweiten Teilbereich an den Verfestigungsvorgang im ersten Teilbereich angleicht. Gemäß der Erfindung und zur Lösung der oben genannten Aufgabe ist bei einer solchen Airbag-Abdeckung vorgesehen, dass die Airbag-Abdeckung an ihrer Außenseite eine zumindestens den wenigstens einen ersten Teilbereich der ersten Schicht überlappende zweite Schicht umfasst, welche aus anderem Material gebildet ist als die erste Schicht.

Die erste Schicht wird in der Regel die bei am Fahrzeug montierter Airbag-Abdeckung dem Airbag zugewandte Schicht sein, so dass die zweite Schicht eine Sichtfläche der Airbag-Abdeckung bildet. Da die zweite Schicht die erste Schicht im Bereich der Aufreißnähte abdeckt und somit die Aufreißnähte von außen nicht sichtbar sind, können die Aufreißnähte ohne weitere Design-Beschränkungen so ausgebildet werden, dass sie im Falle der Zündung eines Airbags zuverlässig und definiert aufreißen.

Die zweite Schicht kann aus einem weicheren Material aufgebaut sein, als die erste Schicht, was einerseits eine größere Designfreiheit bei der Gestaltung der Sichtfläche der Airbag-Abdeckung ermöglicht und andererseits ein zuverlässiges Aufreißen der Aufreißnähte sicherstellen kann.

Wahlweise kann die zweite Schicht aus Kunststoff, Textil, Leder, einer Folie oder auch aus einer Kombination dieser Materialien aufgebaut sein. Besonders die Verwendung einer Folie als zweite Schicht bietet eine Mehrzahl von Gestaltungsmöglichkeiten, insbesondere die Darstellung eines Emblems durch entsprechende Formung und/oder Aufdruck (bevorzugt an der Folieninnenseite). Die genannten Materialien lassen sich ggf. leicht verformen und auch komplexen Oberflächenformen der Airbag-Abdeckung anpassen.

Um die Aufreißsicherheit weiter zu steigern, wird vorgeschlagen, dass die zweite Schicht zumindest in ihrem den wenigstens einen Teilbereich der ersten Schicht überlappenden Bereich eine zweite Aufreißnaht aufweist. Im Fall der Verwendung von Stoff oder Leder als die zweite Schicht können diese Materialien an entsprechender Stelle vorgeschädigt, beispielsweise geritzt sein.

In der ersten aus thermoplastischem Kunststoff hergestellten Schicht der Airbag-Abdeckung ist die Ausnehmung vorzugsweise durch eine Nut gebildet, welche in einer senkrecht zur Nutverlaufsrichtung verlaufenden Schnittebene im Wesentlichen eine Dreiecksform oder eine Trapezform aufweist. Eine solche Nut kann beim Gießen in der Gussform durch eine im Querschnitt dreieckige Rippe bzw. durch eine im Querschnitt trapezförmige Rippe der Gussform ausgebildet werden.

Durch die erfindungsgemäße Ausbildung der Airbag-Abdeckung aus mindestens zwei Schichten kann nun, wie bereits erwähnt, die Tiefe der Nut der Aufreißnaht so gewählt werden, dass ein zuverlässiges Aufreißen der Airbag-Abdeckung im Fall der Zündung eines Airbags sichergestellt wird. Gemäß einer Ausführungsform der Erfindung kann die Nut der Aufreißnaht die erste Schicht dann auch vollständig durchsetzten. Es wird auf diese Weise eine besonderes hohe Aufreißsicherheit gewährleistet, da die Aufreißnaht an dieser Stelle nur durch die zweite Schicht zusammengehalten wird.

Alternativ kann die Nut in einem Abstand von der zweiten Schicht enden, der etwa das 0,1 bis 0,5-fache, besser das 0,1 bis 0,2-fache, am besten das 0,166-fache (= 1/6) der Dicke der ersten Schicht beträgt. Die erste Schicht weist dann im Nahtbereich eine relativ gute mechanische Stabilität auf, während gleichzeitig ein sicheres Aufreißen der Aufreißnaht bei Auslösung des Airbags sichergestellt ist.

Um ein besonders gut definiertes Aufreißverhalten zu erzielen, d.h. den Verlauf der Aufreißnaht besonders gut vorher festsetzen zu können, wird bei einer trapezförmigen Nut bzw. bei einer die erste Schicht vollständig durchsetzenden Nut daran gedacht, dass in einer senkrecht zur Nutverlaufsrichtung verlaufenden Schnittebene die Nut an ihrer schmalsten Stelle eine Breite im Bereich von etwa 0,1 mm bis 1,0 mm, vorzugsweise im Bereich von 0,1 mm bis 0,5 mm aufweist. Eine solche Aufreißnaht kann auf einfache Weise hergestellt werden, indem eine relativ spitze Dreiecksnut einer die Innenseite der Airbag-Abdeckung formenden Gussteilhälfte gerade auf der gegenüberliegenden Gussteilhälfte aufsetzt.

Um das Aufreißverhalten der Airbag-Abdeckung weiter zu verbessern, wird zudem daran gedacht, dass die in Nutverlaufsrichtung verlaufenden Nutschenkelflächen zwischen sich einen Winkel im Bereich von 0° bis 90°, vorzugsweise einen Winkel im Bereich von etwa 20° bis etwa 30°, einschließen. Es wird damit die Gesamtbreite der Aufreißnaht verringert, so dass bei Einwirkung der durch den sich expandierenden Airbag auftretenden Kräfte eine bessere Spannungskonzentration im Bereich der Nut erreicht werden kann und die Airbag-Abdeckung an der festgelegten Stelle definierter und sicherer aufreißt.

Die Erfindung wird im Folgenden an Ausführungsbeispielen anhand der Zeichnungen erläutert:
- Fig. 1: zeigt in perspektivischer Darstellung die Vorderansicht einer erfindungsgemäßen Airbag-Abdeckung.
- Fig. 2: zeigt in perspektivischer Darstellung die Rückansicht der Airbag-Abdeckung von Figur 1.
- Fig. 3 und Fig. 4: zeigen eine Rück- bzw. Seitenansicht der Airbag-Abdeckung von Figur 1 und 2.
- Fig. 5: zeigt eine Draufsicht auf ein Formwerkzeug zur Herstellung einer Airbag-Abdeckung.
- Fig. 6: zeigt eine Schnittansicht des Formwerkzeugs nach Linie VI-VI in Fig. 5.
- Fig. 7: zeigt eine Draufsicht auf ein Einsatzteil für die Gussform.
- Fig. 8: zeigt eine Schnittansicht entlang der Line D-D aus Fig. 7.
- Fig. 9: zeigt eine Vorderansicht des Einsatzteils aus Fig. 7.
- Fig. 10: zeigt eine Schnittansicht gemäß einer Linie C-C in Fig. 7.
- Fig. 11: zeigt eine Unteransicht einer Airbag-Abdeckung gemäß einer zweiten Ausführungsform der vorliegenden Erfindung.
- Fig. 12: zeigt eine Draufsicht auf ein Einsatzteil als Teil eines Formwerkzeugs zur Herstellung der Airbag-Abdeckung gemäß Fig. 11.
- Fig. 13: zeigt eine Schnittansicht entlang der Linie XIII-XIII aus Fig. 12.
- Fig. 14: zeigt eine schematische Schnittansicht eines in eine Airbag-Abdeckung eingesetzten Gussformteils.
- Fig. 15: zeigt eine Schnittansicht einer erster Ausführungsvariante der Aufreißnaht in einer senkrecht zur Nahtverlaufsrichtung verlaufenden Schnittebene.
- Fig. 16: zeigt eine zweite Ausführungsvariante der Aufreißnaht in einer senkrecht zur Nahtverlaufsrichtung verlaufenden Schnittebene.
- Fig. 17: zeigt eine dritte Ausführungsvariante der Aufreißnaht in einer senkrecht zur Nahtverlaufsrichtung verlaufenden Schnittebene.

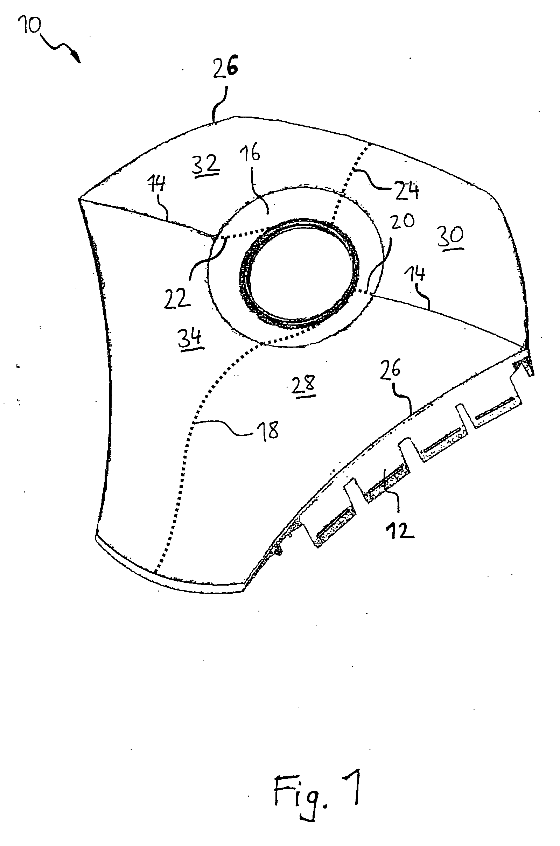

Figur 1 zeigt in perspektivischer Darstellung eine Draufsicht auf eine allgemein mit 10 bezeichnete Airbag-Abdeckung oder Airbagkappe, welche im Bereich eines Lenkrads eines Fahrzegs zur Abdeckung eines Airbags montiert werden kann. Dazu weist die Airbag-Abdeckung 10 an ihrem umlaufenden Rand Laschen 12 auf, welche mit entsprechenden Aufnahmeeinrichtungen des Lenkrads verbindbar sind. Nach den Designvorgaben der Airbag-Abdeckung 10 der Fig. 1 weist diese eine etwa drachenförmige Grundfläche auf und besitzt eine leicht gewölbte Oberfläche. An zwei Designkanten 14 ist diese Wölbung leicht abgeknickt und etwa mittig ist eine kreisförmige Vertiefung 16 vorgesehen, welche beispielsweise der Aufnahme eines Herstelleremblems dient.

Ausgehend von dieser Vertiefung verlaufen entlang der Unterseite der Airbag-Abdeckung 10 vier Aufreißnähte 18, 20, 22, 24 in etwa rechtwinklig zueinander in Richtung des Randbereichs 26 der Airbag-Abdeckung 10. Auf diese Weise bilden die Aufreißnähte 18, 20, 22, 24 zusammen mit jeweiligen Abschnitten des Randbereichs 26 der Airbag-Abdeckung 10 Aufreißklappen 28, 30, 32, 34, welche bei einer Explosion des Airbags aufklappen, um den Airbag freizugeben, wobei die Aufreißklappen 28, 30, 32, 34 jedoch im Randbereich der Airbag-Abdeckung 10 mit der Airbag-Abdeckung 10 verbunden bleiben.

Die Aufreißnähte 20, 22 sind so angeordnet, dass sie größtenteils entlang der Designkanten 14 verlaufen, so dass ein Sichabzeichnen des Nahtverlaufs auf Grund leichter Einfallstellen oder Schwielen im Bereich dieser Nähte nicht zu einer optischen Beeinträchtigung der Oberfläche führt. Die Aufreißnaht 24 ist relativ kurz, so dass auch in diesem Bereich eine Einfallstellen- bzw. Schwielenbildung optisch nicht sehr auffällig ist. Die Aufreißnaht 18 erstreckt sich dagegen über einen großen, gut sichtbaren Bereich der gewölbten Oberfläche der Airbag-Abdeckung 10, so dass eine optisch unauffällige Gestaltung dieser Naht wünschenswert ist.

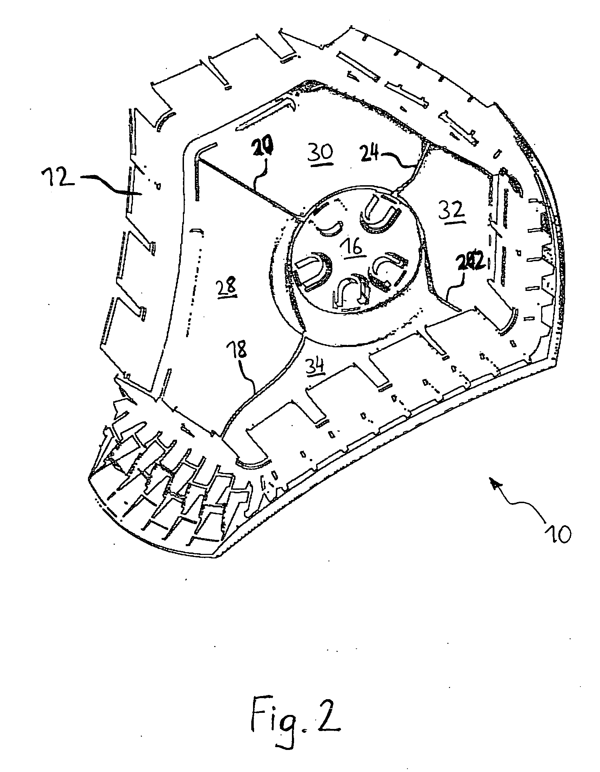

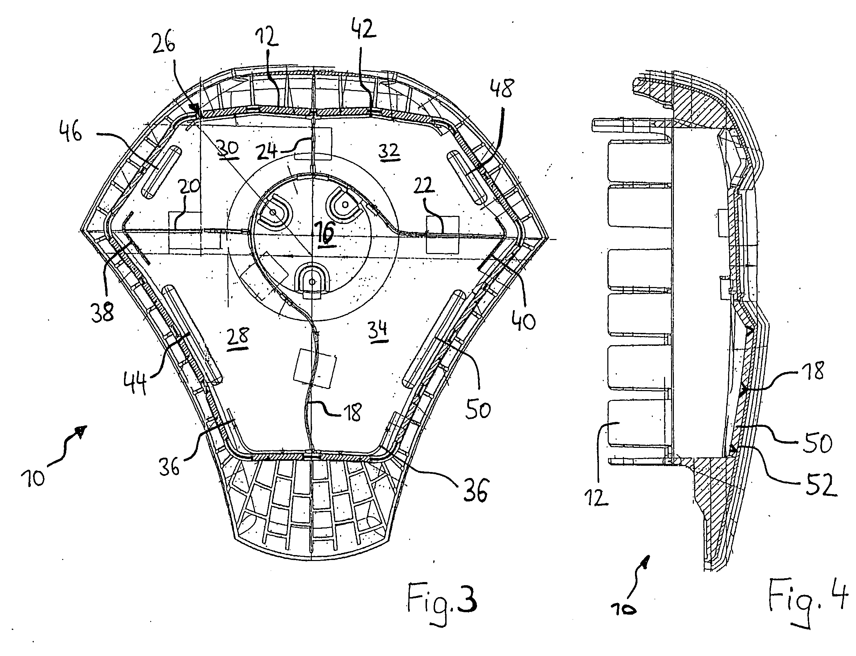

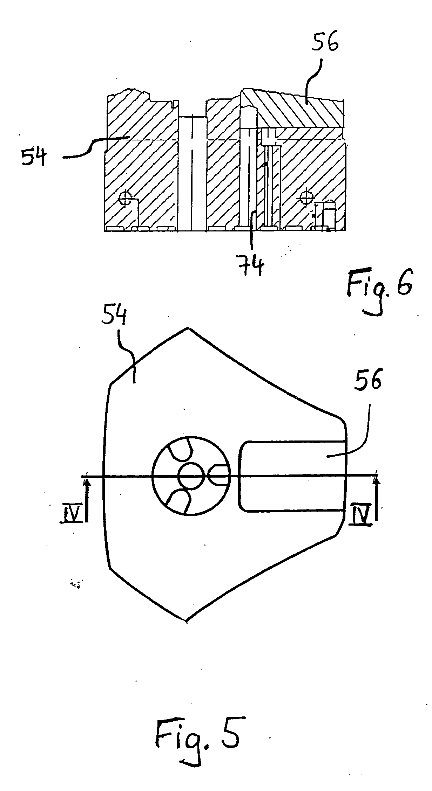

In Figur 2 ist eine perspektivische Unteransicht der Airbag-Abdeckung 10 dargestellt und die Figuren 3 und 4 zeigen eine untere Schnittansicht bzw. eine seitliche Schnittansicht derselben Airbag-Abdeckung. Wie besonders in Fig. 3 erkennbar ist, sind an den dem Randbereich 26 zugewandten Enden der Aufreißnähte 18, 20, 22, 24 jeweils weitere, eine bestimmte Wegstrecke entlang des Randbereichs 26 verlaufende Randaufreißnähte 36, 38, 40, 42 ausgebildet, um die Verbindung zwischen den Aufeißklappen 28, 30, 32, 34 während des Aufklappens auf die Scharniere 44, 46, 48, 50 festzulegen. Die Scharniere 44, 46, 48, 50 können aus einer Materialverstärkung gebildet sein.

Aus Figur 4 ist ersichtlich, dass die Airbag-Abdeckung 10 aus zwei Kunststoffschichten 50, 52 gebildet ist, wobei die untere Schicht 50 aus einem härteren Kunststoff gebildet ist, um der Airbag-Abdeckung 10 die nötige Festigkeit zu verleihen, und die obere Schicht 52 aus einem weicheren Kunststoff gebildet ist, um bestimmte Design- und Komfortvorgaben zu erfüllen. In Fig. 4 ist ferner die Aufreißnaht 18 als rillenförmige Vertiefung mit in etwa dreieckiger Querschnittsform erkennbar, welche in die innere, härtere Kunststoffschicht 50 eingeformt ist und den zweiten Teilbereich mit relativ großem Oberflächen-Volumen-Verhältnis bildet.

Figur 5 und Figur 6 zeigen eine Draufsicht und eine Schnittansicht eines Teils einer Gussform, der die Unterseite der Airbag-Abdeckung formt. Dieser umfasst einen Grundkörper 54 aus einem gut wärmeleitenden Material, beispielsweise Kupfer oder Wärmeleitbronze, welcher so ausgebildet ist, dass er den größten Teil der Unterseite der Airbag-Abdeckung 10, die Vertiefung 16, die Laschen 12 sowie die Aufreißnähte 20, 22, 24 formt. Dazu wird der Grundkörper 54 in an sich bekannter Weise in einen zweiten, wannenartigen Teil der Gussform eingesetzt, dessen Innenwandungen so geformt sind, dass im eingesetzten Zustand des Grundkörpers 54 zwischen dem Grundkörper 54 und den Innenwandungen des wannenartigen Gussformteils ein Hohlraum entsteht, der die Form der zu gießenden Airbag-Abdeckung 10 aufweist. Auf eine bekannte Weise ist der Grundkörper 54 und das wannenartige Gussformteil etwa mittels eines Fluidleitungssystems temperierbar.

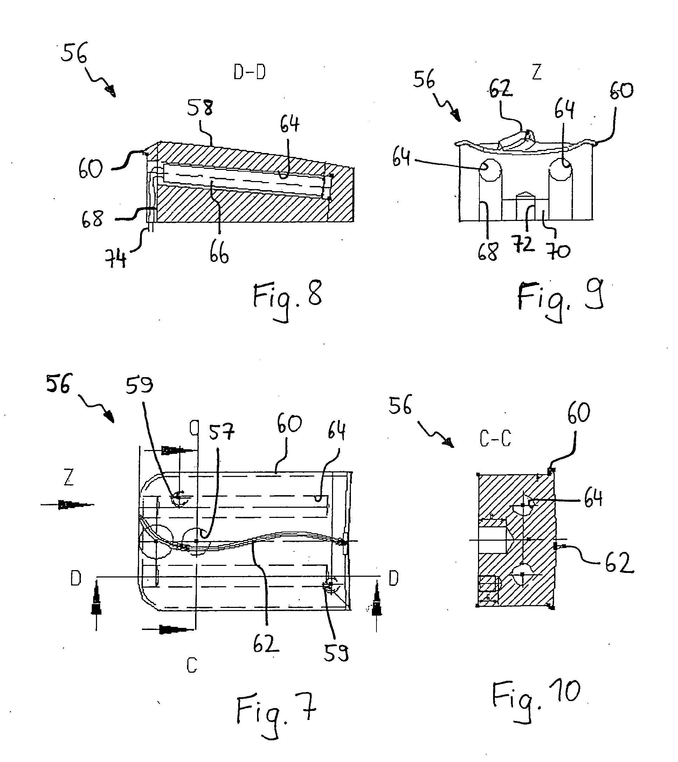

In den Grundkörper 54 ist ein Einsatzteil 56 einsetzbar, welches die lange Aufreißnaht 18 sowie einen Bereich um diese Naht herum formt. Das Einsatzteil 56 ist in den Fig. 7-10 in zwei Seitenansichten und zwei Schnittansichten dargestellt. Es kann beispielsweise aus einem Vergütungsstahl hergestellt sein und hat im Wesentlichen eine quaderförmige Gestalt. Die Oberseite 58 des Einsatzteils 56 weist entsprechend der zu formenden Airbag-Abdeckung eine Abschrägung mit einer leichten Wölbung auf und wird von einem flanschartig überstehenden Rand 60 umlaufen, welcher der Montage am Grundkörper 54 dient. Zur Montage am Grundkörper 54 weist das Einsatzteil 56 außerdem eine Zentrierbohrung 57 sowie zwei Befestigungsbohrungen 59 zum Einführen von Befestigungsmitteln auf. Auf der gewölbten Oberseite 58 ist außerdem eine Rippe 62 mit dreieckförmigem Querschnitt ausgebildet, welche die lange Aufreißnaht 18 der Airbag-Abdeckung formt.

Um während des Abkühlens der Airbag-Abdeckung im Bereich der Naht 18 eine andere Temperaturführung zu ermöglichen als im übrigen Teil der Airbag-Abdeckung, weist das eine Teil 56 zwei Einbohrungen 64 auf, in welche jeweils ein zylinderförmiges Heizelement 66 (Fig. 8) einführbar ist. Zur Kontaktierung der Heizelemente 66 ist das Einsatzteil 56 an den Eingängen der Einbohrungen 64 mit Ausfräsungen 68 versehen, die jeweils von den Öffnungen der Einbohrungen 64 weg führen, sowie mit einer Querfräsung 70, welche die Einfräsungen 68 miteinander verbindet. Die Querfräsung 70 wiederum wird von einer Einbohrung 72 geschnitten, so dass die Zu- und Ableitungen 74 der Heizelemente 66 aus den Einbohrungen 64 heraus, entlang der Einfräsungen 68 und der Querfräsung 70 und schließlich durch die Einbohrung 70 geführt werden können und anschließend durch einen in Fig. 6 sichtbaren Kanal 74 durch den Grundkörper 54 hindurchgeleitet und somit zugänglich gemacht werden können.

Zur Herstellung einer Airbag-Abdeckung 10 kann nun beispielsweise wie folgt vorgegangen werden. Das Einsatzteil 56 wird mittels der Zentrierschraube 57 und der Befestigungsschrauben 59 am Grundkörper 54 befestigt und beide Teile werden mit dem wannenartigen Gussformteil zusammengefügt, so dass zwischen dem Grundkörper 54 bzw. dem Einsatzteil 56 und den Innenwandungen des wannenartigen Gussformteils ein Hohlraum entsprechend der Form der harten Kunststoffschicht 50 der Airbag-Abdeckung 10 entsteht. In diesen Hohlraum wird eine plastifizierte Kunststoffmasse von etwa 200°C eingespritzt. Mit Hilfe des Fluid-Temperierungssystems wird die Temperatur des Grundkörpers 54 sowie des wannenartigen Gussformteils auf etwa 50°C gehalten, während die Heizelemente 66 des Einsatzteils 56 so betrieben werden, dass das Einsatzteil insbesondere im Bereich der Rippe 62, eine Temperatur von etwa 100°C aufweist. Die anfänglich etwa 200°C heiße Kunststoffmasse wird daher im gesamten Anlagebereich an der Gussform abgekühlt, jedoch findet diese Abkühlung in dem durch das Einsatzteil 56 geformten Bereich der Aufreißnaht 18 mit deutlich geringerer Abkühlrate statt. Damit ist es möglich, den Verfestigungsvorgang im Bereich der Aufreißnaht 18 dem Verfestigungsvorgang im übrigen Bereich der gewölbten Oberfläche der Airbag-Abdeckung durch eine entsprechend unterschiedliche Temperaturführung anzugleichen.

Nachdem sich die Temperatur der Kunststoffmasse im Wesentlichen der Temperatur der Gussformteile angepasst hat, wird die Gussform geöffnet und die erstarrte Airbag-Abdeckung ausgestossen. Gewünschtenfalls kann in einem weiteren Schritt eine zweite, weichere Kunststoffschicht 52 unter Verwendung eines herkömmlichen Verfahrens aufgebracht werden.

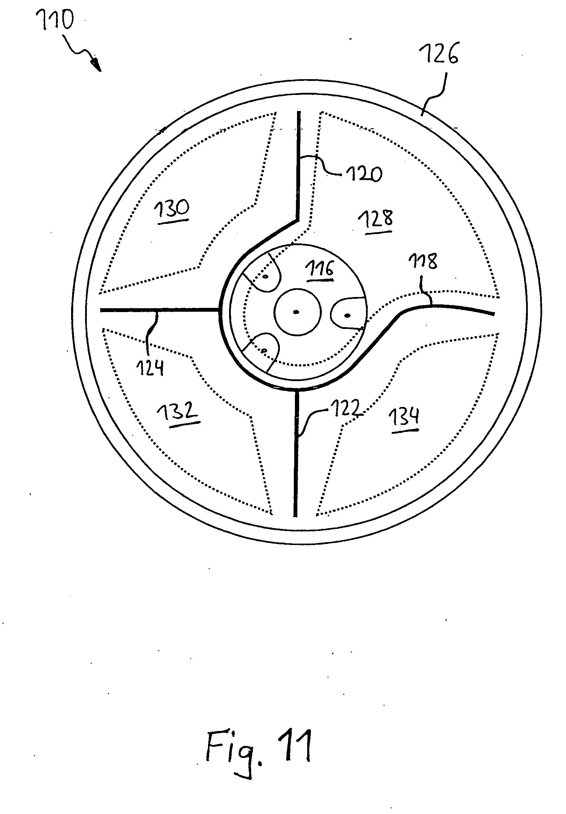

Figur 11 zeigt ein weiteres Beispiel einer Airbag-Abdeckung 110 in einer Unteransicht, welche einen umlaufenden Rand 126, eine runde Vertiefung 116 und mehrere Aufreißnähte 118, 120, 122, 124 aufweist, welche die Vertiefung 116 teilweise umlaufen und von dieser zum Rand 126 führen. Im Falle des Öffnens des Airbags reißen die Aufreißkanten 118, 120, 122, 124 auf und bilden vier Aufreißklappen 128, 130, 132, 134, welche in die Zeichenebene der Fig. 11 hinein aufklappen (in Fig. 11 mit punktierten Umrisslinien schematisch angedeutet), um den Airbag austreten zu lassen. Die Vertiefung 116 ist dabei Teil der Aufreißklappe 128. Gemäß den Designvorgaben der Airbag-Abdeckung dieses Beispiels verlaufen alle vier Aufreißkanten unterhalb glatter oder gleichmäßig strukturierter, leicht gewölbter Oberflächen, so dass ein Abzeichnen aller Aufreißkanten an der Oberfläche vermieden werden sollte.

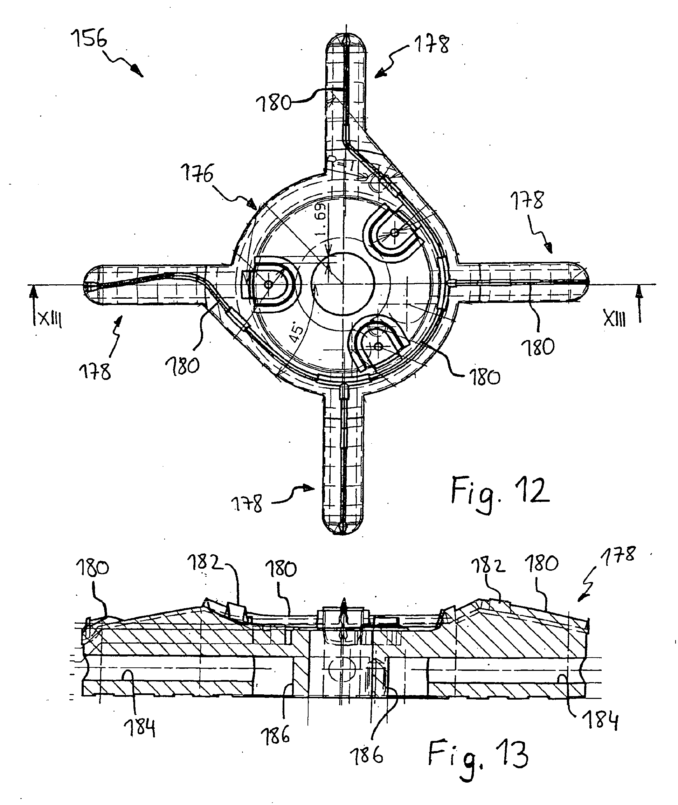

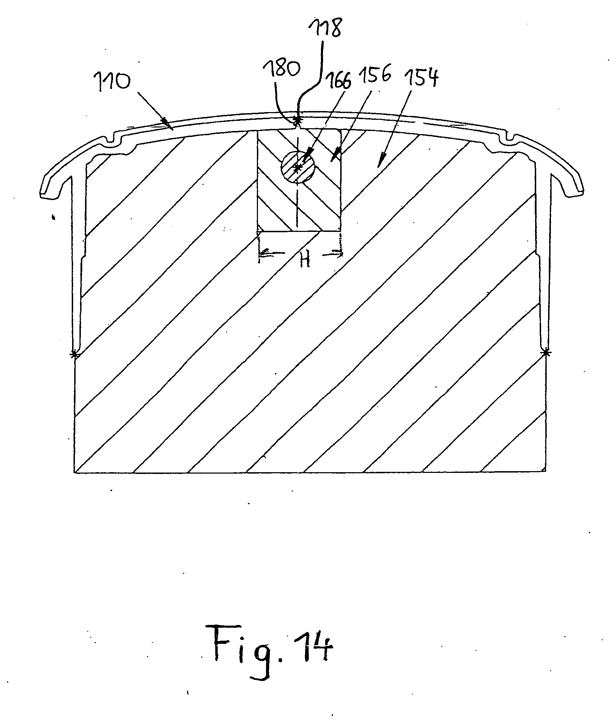

Dazu kann ein Gussformteil eingesetzt werden, welches in den Fig. 12 und 13 in einer Draufsicht und einer Schnittansicht dargestellt ist. Der abgebildete Teil der Gussform entspricht dem Einsatzteil 56 und bildet somit ein Einsatzteil 156 für einen nicht dargestellten Grundkörper. Es weist einen zentralen, im Wesentlichen scheibenförmigen Abschnitt 176 sowie vier integral mit dem scheibenförmigen Abschnitt 176 verbundene Arme 178 auf. Auf den Armen 178 sowie entlang eines Randbereichs des scheibenförmigen Abschnitts 176 verlaufen Rippen 180 mit in etwa dreieckförmigem Querschnitt, welche die Aufreißnähte 118, 120, 122, 124 der Airbag-Abdeckung formen. Weiterhin sind an zentrumsnahen Punkten der Rippen 180 Stege 182 ausgebildet, welche an entsprechenden Stellen der Aufreißnaht der Airbag-Abdeckung zusätzlich geschwächte Stellen erzeugen, die als Anreißpunkte für den Beginn des Aufreißvorgangs der Aufreißnähte dienen.

Das Einsatzteil 156 kann analog dem Einsatzteil 56 der ersten Ausführungsform mittels elektrischer Heizelemente temperiert werden. Dazu weisen die Arme 178 Längsbohrungen 184 auf, welche jeweils entlang der Armrichtungen verlaufen, um jeweils ein zylinderförmiges Heizelement aufzunehmen. Über Anschlussbohrungen 186, welche die Längsbohrungen 184 jeweils schneiden, können die Zu- und Ableitungen der Heizelemente nach außen geführt und kontaktiert werden.

Figur 14 zeigt in einer schematischen Darstellung die Anwendung des Einsatzteils 156 beim Formen einer Airbag-Abdeckung. Das Einsatzteil 156 ist dabei in einen Grundkörper 154 eingesetzt, so dass sie zusammen, abgesehen von der Rippe 180, eine durchgehend glatte, leicht gewölbte Anlagefläche bilden, an welcher die erkaltende Kunststoffmasse der Airbag-Abdeckung 110 anliegt. Die Rippe 180 formt in der Unterseite der Airbag-Abdeckung 110 die Aufreißnaht 118. Gleichzeitig bewirkt die Rippe 180 jedoch die erfindungsgemäße Temperaturführung im Bereich der Naht 118 und darüber hinaus in einem durch die Breite H des Einsatzteils 156 definierten Heizbereich, da die Rippe 180 integral oder zumindest gut wärmeleitend mit dem Einsatzteil 156 verbunden ist, welches durch das Heizelement 166 beheizt wird. Durch eine der zuvor beschriebenen Temperaturführung analoge Temperaturführung lässt sich dann eine Airbag-Abdeckung herstellen, welche relativ dünne und damit ein sicheres Aufreißen gewährleistende Aufreißnähte 118, 120, 122, 124 aufweist, die sich auf der Sichtfläche der Airbag-Abdeckung 110 nicht abzeichnen.

Bei Nutquerschnittsdimensionen im Bereich von etwa 1 mm kann die Breite H des Heizbereichs, abhängig vom Design der Airbag-Abdeckung, etwa 8 bis 60 mm, vorzugsweise etwa 10 mm betragen.

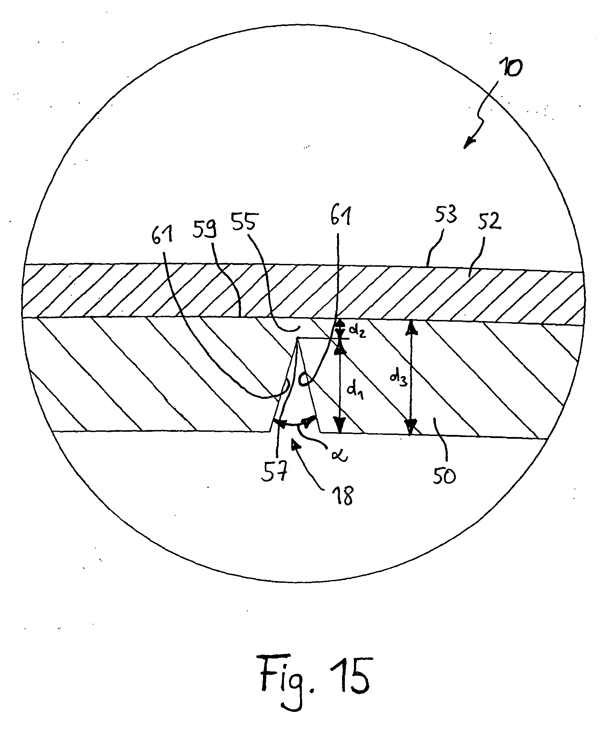

Unter Bezugnahme auf die Figuren 15, 16 und 17 werden im folgenden drei Ausführungsvarianten einer nutförmigen Aufreißnaht gemäß der Erfindung beschrieben. Es werden dabei die Bezugszeichen der ersten Ausführungsform der erfindungsgemäßen Airbag-Abdeckung verwendet bzw. fortgesetzt, wenngleich die im folgenden beschriebenen Merkmale selbstverständlich ebenso auf die Airbag-Abdeckung gemäß der zweiten und dritten Ausführungsform Anwendung finden können.

Die Airbag-Abdeckung 10, welche in Figur 15 in einer Teilquerschnittsansicht dargestellt ist, umfasst eine erste Schicht 50 und eine zweite Schicht 52. In einem am Fahrzeug, beispielsweise am Lenkrad eines Fahrzeugs, zur Abdeckung eines Airbags (nicht gezeigt) eingebauten Zustand ist die erste Schicht 50 dem Airbag zugewandt, während die zweite Schicht 52 vom Airbag weg weist und eine Sichtfläche 53 der Airbag-Abdeckung bereitstellt.

Zur Bereitstellung einer Aufreißnaht, entlang welcher sich die Airbag-Abdeckung im Fall des Aufblasens des Airbags öffnet, ist in die erste Schicht 50 von der dem Airbag zugewandten Seite her eine Nut 18 gemäß einer ersten Ausführungsvariante eingebracht, welche im Querschnitt der Figur 15 im Wesentlichen Dreiecksform aufweist. Die Tiefe d₁ der Nut 18 beträgt deutlich mehr als die Hälfte der Dicke d₃ der ersten Schicht 50, so dass für einen Aufreißabschnitt 55 der ersten Schicht 50, welcher durch Material der ersten Schicht 50 zwischen dem Nutboden 57 der Nut 18 und der der Nut 18 abgewandten Seite 59 der ersten Schicht 50 gebildet ist, eine Dicke d₂ verbleibt, die deutlich weniger als die Hälfte der Dicke d₃ beträgt.

Gemäß der Erfindung kann nun die Tiefe d₁ der Nut 18 so gewählt werden, dass die Dicke d₂ des Aufreißabschnitts 55 ausreichend klein ist, um ein sicheres Aufreißen der ersten Schicht 50 an diesem Aufreißabschnitt 55 sicherzustellen, wobei die zweite Schicht 52 ein optimales Erscheinungsbild der Sichtfläche 53 auch im Bereich der Nut 18 sicherstellt.

Je nach gewünschtem Design der Airbag-Abdeckung 10 können als Material für die zweite Schicht 52 ein Kunststoff, beispielsweise TPE (thermoplastisches Eiastomer), TE(PEEST) (thermoplastisches Polyester-Elastomer) TE(PEBBS+PP) (Styrol-Ethylen-Butylen-Styrol-Elastomer) oder TE(PEUR) (thermoplastisches Polyurethan Elastomer), mit einer Dicke von etwa 1 mm bis etwa 2,5 mm, besser etwa 1 mm bis 1,6 mm verwendet werden. Denkbar ist ferner die Verwendung einer Gewebe- oder Stoffschicht, insbesondere aus Innenraumstoff, mit einer Dicke von bis zu 2 mm, einer Lederschicht mit einer Dicke im Bereich von 0,4 mm bis 0,8 mm, oder einer Folie, welche beliebig bedruckt oder vorgeformt sein kann, um insbesondere ein Emblem des Fahrzeugs zu zeigen. Für die wie oben beschrieben hergestellte erste Schicht 50 der Airbag-Abdeckung 10 kann ebenfalls ein Kunststoff, beispielsweise TE(EPDM+PP), TE(EPDM-X+PP) (thermoplastisches Polyolefine-Elastomer mit vernetztem bzw. unvernetztem EPDM), TE(PEEST) (thermoplastisches Polyester-Elastomer), TE (PEBBS+PP) (Styrol-Ethylen-Butylen-Styrol-Elastomer) oder TE(PEUR) (thermoplastisches Polyurethan Elastomer), mit einer Dicke im Bereich von etwa 2 mm bis 3 mm gewählt werden.

Zur Verbindung von erster Schicht 50 und zweiter Schicht 52 kann im Falle der Verwendung einer Kunststoffschicht als zweite Schicht 52 diese nach dem Gießen der ersten Schicht 50 einfach angespritzt werden. Alternativ können zwischen erster Schicht 50 und zweiter Schicht 52 Klebverbindungen eingesetzt werden, wobei die zweite Schicht 52 dann auch aus Folie oder einem anderen Material, etwa Leder oder Stoff gebildet sein kann.

Eine weitere Möglichkeit zur Herstellung einer einfachen und besonders sicheren Verbindung zwischen einer Folie als zweite Schicht 52 und der ersten Schicht 50 ist das Unterspritzen der Folie direkt bei der Herstellung der ersten Schicht 50. Dazu wird die Folie, welche ggf. bereits bedruckt oder zur leichteren Anpassung an die Form der Airbag-Abdeckung vorgeformt ist, direkt in die zum Gießen der ersten Schicht 50 vorgesehene Gussform eingelegt, sodass sie mit dem plastifizierten Kunststoff für die erste Schicht 50 in Berührung kommt.

Die gemäß der ersten Ausführungsvariante der Aufreißnaht ausgebildete Nut 18 zeichnet sich weiter dadurch aus, dass ein zwischen den Nutschenkelflächen 61, 61 eingeschlossener Winkel α kleiner als 90° ist und vorzugsweise eine Größe im Bereich von 20° bis 30° aufweist. Auf diese Weise wird die Gesamtbreite der Nut 18 in der Ebene der zweiten Schicht 50 reduziert, so dass durch eine Konzentration der Aufreißspannung auf einen geringeren Bereich das Aufreißverhalten verbessert werden kann.

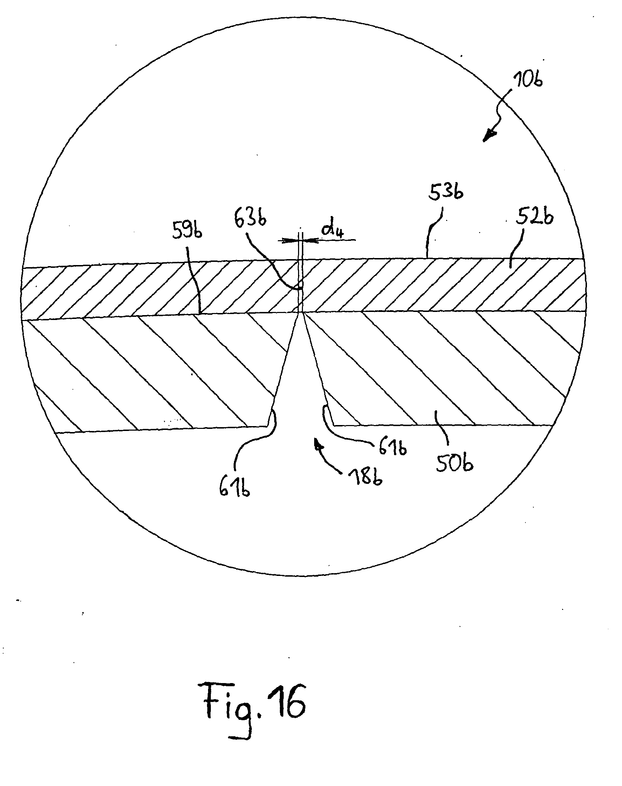

Eine zweite Auführungsvariante der Aufreißnaht der erfindungsgemäßen Airbag-Abdeckung 10b ist in Figur 16b gezeigt. Die Aufreißnaht dieser Ausführungsvariante ist ebenfalls durch eine Nut 18b in der ersten Schicht 50 aufgebildet. Im Gegensatz zur Nut 18b der ersten Ausführungsvariante durchsetzt jedoch die Nut 18b die erste Schicht 50b vollständig. Auch eine solche die erste Schicht 50b vollständig durchsetzende Nut kann von dreieckiger Querschnittsform ausgebildet sein, wenn sich die beiden die Nut bildenden Nutschenkelflächen gerade an einer Oberfläche der ersten Schicht 50b treffen. In der zweiten Ausführungsvariante gemäß Figur 16 weist die Nut 18b jedoch eine trapezförmige Querschnittsform auf, so dass die Nutschenkelflächen 61 b, 61 b an der Kontaktfläche 59b zwischen der ersten Schicht 50b und der zweiten Schicht 52b zumindest einen Abstand d₄ von einander aufweisen. Der Abstand d₄ der Nutschenkelflächen liegt vorzugsweise im Bereich von 0,1 mm bis 0,5 mm und ist daher relativ klein gegenüber der Schichtdicke der ersten Schicht 50b, welche vorzugsweise im Bereich von etwa 2 mm bis 3 mm liegt.

Bei der Verwendung einer Aufreißnaht gemäß der zweiten Ausführungsvariante (Figur 16) ist die Aufreißnaht also nur noch durch den der Nut 18b gegenüberliegenden Nahtbereich 63b der zweiten Schicht 52b geschlossen. Im Falle der Zündung des durch die Airbag-Abdeckung 10b abgedeckten Airbags ist dann nur noch der Widerstand des Nahtbereichs 63b der zweiten Schicht 52b zu überwinden und die Airbag-Abdeckung 10b reißt daher zuverlässig und definiert auf.

Bei der Verwendung einer Aufreißnaht gemäß der zweiten Ausführungsvariante kann es von Vorteil sein, als Material für die zweite Schicht 52b ein relativ formstabiles Material, wie etwa eine zweite Kunststoffschicht, zu verwenden, um im geschlossenen Zustand der Airbag-Abdeckung 10b ein optimales äußeres Erscheinungsbild sicherzustellen und zu vermeiden, dass sich die Aufreißnaht an der Sichtfläche 53b der Airbag-Abdeckung 10b abzeichnet.

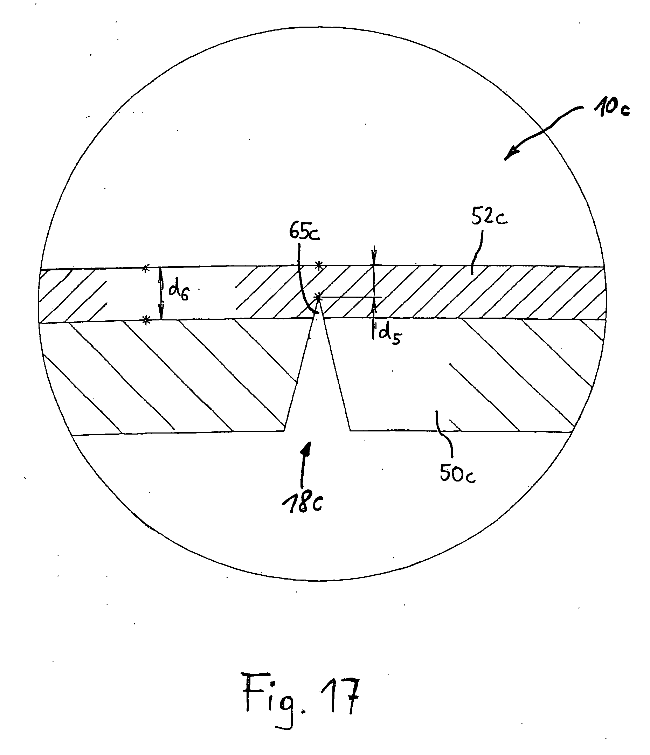

Um die Aufreißsicherheit der zweiten Schicht zu verbessern und die Position der Aufreißstelle der zweiten Schicht genauer definieren zu können, kann gemäß einer in Figur 17 illustrierten dritten Ausführungsvariante der erfindungsgemäßen Airbag-Abdeckung 10c in der zweiten Schicht 52c in einem der Aufreißnaht in der ersten Schicht benachbarten Bereich ebenfalls eine Aufreißnaht 65c vorgesehen sein, indem die zweite Schicht 52c an dieser Stelle beispielsweise vorgeschädigt wird. Wird als zweite Schicht 52c eine Folie verwendet, die in dem Spritzgießverfahren zur Herstellung der ersten Schicht 50c, wie oben beschrieben, unterspritzt wird, so kann ein Werkzeug zum Vorschädigen der Folie in der Gussform angebracht sein, sodass die Aufreißnaht 65c in der Folie direkt beim Gießen der Airbag-Abdeckung 10c ausgebildet wird. Genauer gesagt kann eine Rippe der Gussform, welche die die erste Schicht 50c vollständig durchsetzende Nut 18c formt, mit ihrem Kamm die Innenseite der Folie beim Zusammensetzen der Gussform vorschädigen, so dass die Nut 18c die erste Schicht 50c vollständig und die zweite Schicht 52c teilweise durchsetzt. Der Abstand d₅ vom äußeren Teilbereich der zweiten Schicht 52c beträgt etwa das 0,1 bis 0,75-fache, besser das 0,2 bis 0,6-fache, am besten das 0,5-fache der Dicke d₆ der zweiten Schicht 52c.

## Patentansprüche

1. Airbag-Abdeckung (10; 110; 10b; 10c) aus thermoplastischem Kunststoff, welche wenigstens einen ersten Teilbereich mit einem ersten Oberflächen-Volumen-Verhältnis und wenigstens einen zweiten Teilbereich (18; 118, 120, 122, 124; 18b; 18c) mit einem zweiten Oberflächen-Volumen-Verhältnis aufweist, wobei das zweite Oberflächen-Volumen-Verhältnis größer ist als das erste Oberflächen-Volumen-Verhältnis, und welche hergestellt wird, indem man einen in eine temperierte Gussform (54, 56; 154, 156) eingebrachten, plastifizierten Kunststoff so weit abkühlt, bis ein ein Entformen erlaubender Festigungsgrad der Airbag-Abdeckung (10; 110; 10b; 10c) erreicht ist und dann die Airbag-Abdeckung (10; 110; 10b; 10c) entformt,
wobei man den Verfestigungsvorgang im zweiten Teilbereich (18; 118, 120, 122, 124; 18b; 18c) der Airbag-Abdeckung (10; 110; 10b; 10c) durch entsprechend unterschiedliche Temperaturführung im ersten Teilbereich und im zweiten Teilbereich (18; 118, 120, 122, 124; 18b; 18c) an den Verfestigungsvorgang im ersten Teilbereich angleicht,
**dadurch gekennzeichnet, dass** die Airbag-Abdeckung (10; 110; 10b; 10c) aus zwei oder mehr Kunststoffkomponenten (50, 52; 50b, 52b; 50c, 52c) aufgebaut ist.

2. Airbag-Abdeckung (10; 110; 10b; 10c) nach Anspruch 1, **dadurch gekennzeichnet, dass** sie einen den ersten und den zweiten Teilbereich aufweisenden, zumindest angenähert plattenförmigen Abschnitt umfasst, mit einer beiden Teilbereichen gemeinsamen, durchgehenden Sichtfläche auf einer Plattenseite, wobei der zweite Teilbereich (18; 118, 120, 122, 124; 18b; 18c) zumindest stellenweise reduzierte Plattendicke aufweist.

3. Airbag-Abdeckung (10; 110; 10b; 10c) nach Anspruch 2, **dadurch gekennzeichnet, dass** der zweite Teilbereich (18; 118, 120, 122, 124; 18b; 18c) auf seiner anderen Plattenseite mit wenigstens einer Ausnehmung, vorzugsweise Nut, versehen ist.

4. Airbag-Abdeckung (10; 110; 10b; 10c) nach Anspruch 3, **dadurch gekennzeichnet, dass** die Nut (18; 118, 120, 122, 124; 18b; 18c) zumindest als Teilabschnitt einer Aufreißnaht ausgebildet ist.

5. Airbag-Abdeckung (10; 110; 10b; 10c) nach Anspruch 3 oder 4, **dadurch gekennzeichnet, dass** die Ausnehmung (18; 118, 120, 122, 124; 18b; 18c) eine der Kunststoffkomponenten (50b; 50c) durchsetzt.

6. Airbag-Abdeckung (10; 110; 10b; 10c) nach einem der Ansprüche 3 bis 5, **dadurch gekennzeichnet, dass** bei einer Ausnehmung mit Querschnittsabmessungen im Bereich von etwa 1 mm der zweite Teilbereich eine Breite H von 8-60 mm, vorzugsweise von etwa 10 mm aufweist.

7. Spritzgießverfahren zur Herstellung einer Airbag-Abdeckung (10; 110; 10b; 10c) aus thermoplastischem Kunststoff, welche wenigstens einen ersten Teilbereich mit einem ersten Oberflächen-Volumen-Verhältnis und wenigstens einen zweiten Teilbereich (18, 118 20, 122, 124; 18b; 18c) mit einem zweiten Oberflächen-Volumen-Verhältnis aufweist, wobei das zweite Oberflächen-Volumen-Verhältnis größer ist als das erste Oberflächen-Volumen-Verhältnis, in welchem Verfahren man einen in eine temperierte Gussform (54, 56; 154, 156) eingebrachten, plastifizierten Kunststoff so weit abkühlt, bis ein ein Entformen erlaubender Festigungsgrad der Airbag-Abdeckung (10; 110; 10b; 10c) erreicht ist und dann die Airbag-Abdeckung (10; 110; 10b; 10c) entformt, wobei man den Verfestigungsvorgang im zweiten Teilbereich (18; 118, 120, 122, 124; 18b; 18c) der Airbag-Abdeckung (10; 110; 10b; 10c) durch entsprechend unterschiedliche Temperaturführung im ersten Teilbereich und im zweiten Teilbereich (18; 118, 120, 122, 124; 18b; 18c) an den Verfestigungsvorgang im ersten Teilbereich angleich,
**dadurch gekennzeichnet, dass** man die Airbag-Abdeckung aus zwei oder mehr Kunststoffkomponenten (50, 52; 50b, 52b; 50c, 52c) spritzt.

8. Spritzgießverfahren nach Anspruch 7, **dadurch gekennzeichnet, dass** man einen den zweiten Teilbereich (18; 118, 120, 122, 124; 18b; 18c) der Airbag-Abdeckung (10; 110; 10b; 10c) formenden zweiten Abschnitt (56; 156) der ggf. mehrteiligen Gussform auf einer zweiten Temperatur hält, und einen den ersten Teilbereich der Airbag-Abdeckung (10; 110; 10b; 10c) formenden ersten Abschnitt (54; 154) der Gussform auf einer ersten Temperatur hält, und dass die zweite Temperatur höher ist als die erste Temperatur.

9. Spritzgießverfahren nach Anspruch 8, **dadurch gekennzeichnet, dass** die zweite Temperatur etwa 30° - 100°C, vorzugsweise etwa 50° -60°C höher ist als die erste Temperatur.

10. Spritzgießverfahren nach Anspruch 8 oder 9, **dadurch gekennzeichnet, dass** beim Entformen die zweite Temperatur bei 80° - 160°C, vorzugsweise 90° - 110°C, am besten etwa bei 100°C liegt.

11. Spritzgießverfahren nach einem der Ansprüche 8 bis 10, **dadurch gekennzeichnet, dass** die zweite Temperatur 5°C bis 70°C, besser 20°C bis 50°C, am besten etwa 30°C unterhalb der Erweichungstemperatur des Kunststoffs liegt.

12. Spritzgießverfahren nach einem der Ansprüche 7 bis 11, **dadurch gekennzeichnet, dass** man eine Airbag-Abdeckung (10; 110; 10b; 10c) gemäß einem der Ansprüche 1 bis 6 herstellt.

13. Airbag-Abdeckung (10; 110; 10b; 10c), umfassend eine erste Schicht (50; 50b; 50c) aus thermoplastischem Kunststoff, welche wenigstens einen ersten Teilbereich mit im Wesentlichen gleichmäßiger Schichtdicke und wenigstens einen zweiten Teilbereich mit einer in Form wenigstens einer Ausnehmung (18; 118, 120, 122, 124; 18b; 18c) eingebrachten Aufreißnaht aufweist, wobei die erste Schicht (50; 50b; 50c) hergestellt wird, indem man einen in eine temperierte Gussform (54, 56; 154, 156) eingebrachten, plastifizierten Kunststoff so weit abkühlt, bis ein ein Entformen erlaubender Festigungsgrad der ersten Schicht (50; 50b; 50c) erreicht ist und dann die erste Schicht (50; 50b; 50c) entformt und wobei man den Verfestigungsvorgang im zweiten Teilbereich der ersten Schicht (50, 50b; 50c) durch entsprechend unterschiedliche Temperaturführung im ersten Teilbereich und im zweiten Teilbereich an den Verfestigungsvorgang im ersten Teilbereich angleicht,
**dadurch gekennzeichnet,**
**dass** die Airbag-Abdeckung (10; 110; 10b; 10c) an ihrer Außenseite eine zumindestens den wenigstens einen zweiten Teilbereich der ersten Schicht (50; 50b; 50c) überlappende zweite Schicht (52; 52b; 52c) umfasst, welche aus anderem Material gebildet ist als die erste Schicht (50; 50b; 50c).

14. Airbag-Abdeckung (10; 110; 10b; 10c) nach Anspruch 13, **dadurch gekennzeichnet, dass** die zweite Schicht (52; 52b; 52c) aus weicherem Material aufgebaut ist als die erste Schicht (50; 50b; 50c).

15. Airbag-Abdeckung (10; 110; 10b; 10c) nach Anspruch 13 oder 14, **dadurch gekennzeichnet, dass** die zweite Schicht (52; 52b; 52c) aus Kunststoff, Textil, Leder, einer Folie oder einer Kombination dieser Materialien aufgebaut ist.

16. Airbag-Abdeckung (10c) nach einem der Ansprüche 13 bis 15, **dadurch gekennzeichnet, dass** die zweite Schicht (52c) zumindest in ihrem den wenigstens einen ersten Teilbereich der ersten Schicht (50c) überlappenden Bereich eine zweite Aufreißnaht (65c) aufweist.

17. Airbag-Abdeckung (10; 110; 10b; 10c) nach einem der Ansprüche 13 bis 16, **dadurch gekennzeichnet, dass** die Ausnehmung (18; 118, 120, 122, 124; 18b; 18c) in der ersten Schicht (50; 50b; 50c) durch eine Nut gebildet ist, welche in einer senkrecht zur Nutverlaufsrichtung verlaufenden Schnittebene im Wesentlichen eine Dreiecksform oder eine Trapezform aufweist.

18. Airbag-Abdeckung (10b; 10c) nach Anspruch 17, **dadurch gekennzeichnet, dass** die Nut (18b; 18c) die erste Schicht (50b; 50c) vollständig durchsetzt.

19. Airbag-Abdeckung (10; 110) nach Anspruch 17 oder 18, **dadurch gekennzeichnet, dass** die Nut (18) in einem Abstand (d₂) von der zweiten Schicht (52) endet, der etwa das 0,1 bis 0,5-fache, besser das 0,1 bis 0,2-fache, am besten das 0,167-fache (= 1/6) der Dicke (d₃) der ersten Schicht (50) beträgt.

20. Airbag-Abdeckung (10c) nach Anspruch 17, 18 oder 19, **dadurch gekennzeichnet, dass** die Nut (18c) die zweite Schicht (52c) teilweise durchsetzt.

21. Airbag-Abdeckung (10c) nach Anspruch 20, **dadurch gekennzeichnet, dass** die Nut (18c) in einem Abstand (d₅) von der von der ersten Schicht (50c) abgewandten Seitenfläche der zweiten Schicht (52c) endet, der etwa das 0,1 bis 0,75-fache, besser das 0,2 bis 0,6-fache, am besten das 0,5-fache der Dicke (d₆) der zweiten Schicht (52c) beträgt.

22. Airbag-Abdeckung (10b; 10c) nach einem der Ansprüche 17 bis 21, **dadurch gekennzeichnet, dass** in einer senkrecht zur Nutverlaufsrichtung verlaufenden Schnittebene die Nut (18b; 18c) an ihrer schmalsten Stelle eine Breite (d₄) im Bereich von etwa 0,1 mm bis etwa 1,0 mm, vorzugsweise im Bereich von 0,1 mm bis 0,5 mm, aufweist.

23. Airbag-Abdeckung (10; 110; 10b; 10c) nach einem der Ansprüche 17 bis 22, **dadurch gekennzeichnet, dass** die in Nutverlaufsrichtung verlaufenden Nutschenkel (61; 61b) zwischen sich einen Winkel (α) im Bereich von 0° bis 90°, vorzugsweise im Bereich von etwa 20° bis etwa 30°, einschließen.
